# EUROPÄISCHE PATENTANMELDUNG

(11) **EP 2 745 754 A1**
(43) Veröffentlichungstag der Anmeldung: **25.06.2014**
(21) Anmeldenummer: 13004083.5
(22) Anmeldetag: 16.08.2013
(51) Int. Cl.: A47J 36/06, A47J 47/10, A47J 36/00

(54) **Vorrichtung zum Abdecken von Lebensmittelbehältern mit unterschiedlichen Öffnungsweiten und zum Frischhalten des Behälterinhaltes**

(30) Priorität: 20.12.2012 DE 102012024996
(71) Anmelder: Harecker, Armin, 84424 Isen (DE)
(72) Erfinder: Harecker Armin, 84424 Isen (DE); Tröndle, Klaus, 81539 München (DE)

(57) **Zusammenfassung**

Vorrichtung zum Abdecken von festen, oben offenen Lebensmittelbehältern mit unterschiedlich großen Behälteröffnungen. Die Vorrichtung dient gleichzeitig zum Lagehxieren der Abdeckungen gegeneinander und gegenüber dem Behälter und zum Frischhalten der Lebensmittel.

Die Vorrichtung besteht im Wesentlichen aus einer schalenförmigen unteren Abdeckung (1) und einer oberen Abdeckung (4), die zumindest teilweise aus elastischem Material gebildet sind. Die untere Abdeckung wird auf den oberen Rand des jeweiligen Behälters (2) so aufgelegt, dass eine oder mehrere Durchtrittsöffnung(en) (3) über der Behälteröffnung liegen. Auf die untere Abdeckung (1) wird die obere Abdeckung (4) so aufgelegt, dass sie die Durchtrittsöffnung(en) überdeckt. Beide Abdeckungen (1,4) werden zusammen unter elastischer Verformung nach unten gedrückt, wobei im Behälter (2) befindliche Luft entweicht. Nach Entlastung des Druckes entwickeln die Rückstellkräfte der elastisch verformten Abdeckungen (1,4) einen Unterdruck im abgedeckten Behälter, wobei der Unterdruck die Abdeckungen gegeneinander und die untere Abdeckung an den oberen Behälterrand presst.

Mit der Vorrichtung können unterschiedlich große Lebensmittelbehälter mit einem langanhaltender Unterdruck beaufschlagt werden, der die Lebensmittel über lange Zeit frisch hält. Zudem ist durch die Lagefixierung der Abdeckungen gegenüber dem Behälter ein ungewolltes Verschütten, Auskippen oder Ausleeren des Inhaltes des Lebensmittelbehälters unterbunden.

## Beschreibung

Die Erfindung betrifft eine Vorrichtung zum Abdecken von festen, oben offenen Lebensmittelbehältern mit unterschiedlich großen Behälteröffnungen, bestehend aus einer schalenförmigen unteren Abdeckung und einer oberen Abdeckung, wobei die untere Abdeckung mit einer unteren, konvexen Fläche mit Überstand auf den oberen Rand des jeweiligen Behälters umlaufend auflegbar ist, mindestens eine Durchtrittsöffnung im Bereich des Schalentiefpunktes aufweist, welche im aufgelegten Zustand der unteren Abdeckung über der Behälteröffnung liegt, und zumindest im Bereich zwischen der Auflagelinie, die sich bei Auflage auf den Behälterrand des größten Behälters ergibt und einer die Durchtrittsöffnung oder die Durchtrittsöffnungen außen umschließenden Begrenzungslinie aus elastischem Material, insbesondere aus Silikon gebildet ist.

Durch die DE 102009041866 B1 ist eine Vorrichtung dieser Art bekanntgeworden die als Kochgefäßaufsatz zum Verhüten des Überkochens von Flüssigkeiten konzipiert ist und für Kochgefäße unterschiedlicher Offnungsweiten einsetzbar ist. Die bekannte Vorrichtung besteht aus einer schalenförmigen Abdeckung die aus einem elastischen Material, insbesondere aus Silikon gebildet ist und mit ihrer unteren, konvexen Fläche mit Überstand auf den oberen Rand des jeweiligen Behälters auflegbar ist. Die schalenförmige Abdeckung weist mindestens eine Durchtrittsöffnung im Bereich des Schalentiefpunktes bzw. des tiefsten Schalenflächenbereichs auf. Die mindestens eine Durchtrittsöffnung liegt im aufgelegten Zustand der schalenförmigen Abdeckung über der Behälteröffnung. Weiter besteht die Vorrichtung aus einem mit der unteren Abdeckung lösbar verbundenem Verschlussteil, das als obere Abdeckung angesehen werden kann und das dieser Durchtrittsöffnung bzw. diesen Durchtrittsöffnungen zugeordnet ist. Im Ruhezustand verschließt das Verschlussteil die Durchtrittsöffnung bzw. Durchtrittsöffnungen. Kocht die Flüssigkeit soweit hoch, dass sie das Verschlussteil berührt, so drückt die hochkochende Flüssigkeit das Verschlussteil nach oben, das beispielsweise klappbar mit der schalenförmigen Abdeckung verbunden ist. Um dies zu gewährleisten muss das Verschlussteil sehr geringgewichtig und dünnwandig ausgebildet sein. Der Klappbewegung darf nur einen sehr geringer Verformungs- bzw. Öffnungswiderstand entgegenwirken. Das Verschlussteil muss also sehr sensibel reagieren und schon bei geringsten Offnungskräften hochklappen, da ansonsten die hochkochende Flüssigkeit nicht durch die Durchtrittsöffnung(en) sondern durch den Spalt zwischen dem oberen Kochgefäßrand und der lose aufgelegten schalenförmigen Abdeckung austreten würde und damit kein Überkochschutz mehr gewährleistet wäre. Im geöffneten bzw. hochgeklappten Zustand des Verschlussteils tritt die hochkochende Flüssigkeit durch die Durchtrittsöffnung bzw. die Durchtrittsöffnungen nach oben in die als Auffangschale dienende schalenförmige Abdeckung, wo die Flüssigkeit gering erkalten und durch die Durchtrittsöffnung wieder zurück in das Kochgefäß fließen kann.
Das bei dieser bekannten Vorrichtung vorgesehene Verschlussteil kann in seinem Ruhezustand als obere Abdeckung der Durchtrittsöffnungen angesehen werden.
Ein Frischhalten des Behälterinhaltes, ist allenfalls sehr beschränkt möglich und zwar lediglich in dem Umfang wie er bei einem lose aufgelegten, leichtgewichtigen Deckel zu erwarten ist.
Bei dieser bekannten Vorrichtung wird daher als nachteilig angesehen, dass infolge der losen Auflage sowohl der unteren, schalenförmigen Abdeckung auf dem Behälterrand wie auch infolge der leicht zu störenden Auflage der die Durchtrittsöffnung bzw. die Durchtrittsöffnungen verschließenden Bereiche der oberen Abdeckung an der unteren Abdeckung weder eine lagestabile, bzw. eine gegen unachtsames Anstoßen der Vorrichtungsteile unempfindliche, und eine ein unbeabsichtigtes Verschütten des Behälterinhaltes verhindernde Abdeckung, noch ein über längere Zeit wirkendes Frischhalten des Behälterinhaltes gewährleistet ist.

Weiter ist ein nicht druckschriftlicher Stand der Technik bekannt, der aus einer schalenförmigen Abdeckung aus Glas mit einer zentrischen Öffnung und einem Deckel für diese Öffnung besteht. Die schalenförmige Abdeckung besteht aus einem schweren Glaskörper mit einem unterseitigen, elastischen Überzug und ist auf Kochgefäße mit unterschiedlichen Durchmessern auflegbar. Der Deckel ist starr ausgebildet, weist unterseitig eine ringförmige Randdichtung auf und ist lose auf die schalenförmige Abdeckung so auflegbar, dass er die zentrische Öffnung überdeckt. In Deckelmitte ist ein Ventilkopf mit einem Rückschlagventil angeordnet an dem eine Vakuumpumpe zur Erzeugung eines Unterdruckes im Kochgefäß anschließbar ist. Durch den erzeugten Unterdruck ist ein Frischhalten des Kochgefäßinhaltes möglich.
Bei dieser Vorrichtung wird als nachteilig erachtet, dass sie aus vielen Einzelbauteilen besteht und aufwendig in der Herstellung, Lagerung und Handhabung ist. Hierzu ist beispielsweise auf die aus mehreren Materialien bestehenden Schalen- und Deckelteile, das Rückschlagventil oder die Unterdruckpumpe zu verweisen. Da die schalenförmige Abdeckung hauptsächlich aus Glas und der Deckel hauptsächlich aus einem starren Grundkörper gebildet sind, ist die gesamte Vorrichtung schwergewichtig, was zusätzlich als nachteilig erachtet wird.

Aus der WO2007/003210 A1 ist eine als Frischhaltedeckel dienende ebene Abdeckscheibe für unterschiedlich große Behälter bekanntgeworden. Sie ist deutlich größer als die größte Behälteröffnung und besteht aus einer zwischen einer Randverstärkung gespannten, elastischen Folie. Zur lagesicheren Abdeckung bzw. zur Erzeugung eines Unterdruckes im Behälter wird die Scheibe auf den Behälter aufgelegt und im Mittelbereich von Hand nach unten gedrückt. Dabei ist die gesamte Folie bis zu ihrem äußeren Randverstärkungsring zusätzlich elastisch gespannt. Nach Entlastung des Handdruckes wird durch das teilweise elastische Zurückweichen der ganzflächig vorgespannten Folie der Unterdruck im Behälter gehalten und der Folienbereich über dem Behälteröffnungsrand fest an den oberen Behälterrand gepresst.
Bei dieser für sich alleine funktionsfähigen Abdeckscheibe, wird als nachteilig angesehen, dass sie nicht als Ergänzung der eingangs genannten Vorrichtung einsetzbar bzw. nicht mit dieser kombinierbar ist, sondern als zusätzliche, eigenständiges Küchengerätschaft angeschafft werden muss. Damit zusammenhängend treten erhöhte Anschaffungskosten auf und es muss z.B. in der Küche ein zusätzlicher Platz zum Bereitstellen bzw. Lagern geschaffen werden.

Weiter sind allgemein Saugnäpfe für die Anbringung an glatten Flächen wie z.B. Glasscheiben oder Fließen bekannt. Werden diese Saugnäpfe an die Anlagefläche gelegt und durch äußere Krafteinwirkung so elastisch verformt, dass Luft aus dem Saugnapf entweicht, bewirkt die elastische Rückstellkraft des Saugnapfes, dass auch nach Aufhebung der äußeren Krafteinwirkung einen Differenzdruck aufrecht erhalten bleibt. Der Differenzdruck wird also alleinig durch die Rückstellkraft des Saugnapfes erzeugt. Letztlich können die Saugnäpfe der bekannten Art keine funktionstüchtige Ergänzung der eingangs genannten Vorrichtung im Sinne einer Verbesserung der Abdicht- oder Frischhaltefunktion bilden, da sie eine geschlossene Auflagefläche voraussetzen.

Der Erfindung liegt daher die Aufgabe zugrunde, eine Vorrichtung der eingangs genannten Art dahingehend weiterzubilden, dass mit geringem Aufwand und einfach handhabbaren Mitteln eine zuverlässigere Abdeckfunktion und eine verbesserte Frischhaltefunktion erzielt wird.

Diese Aufgabe wird gemäß der Erfindung mit den im Anspruch 1 angegebenen Merkmalen gelöst.

Wird die bei der eingangs genannten Vorrichtung bzw. bei der Vorrichtung gemäß dem eingangs genannten Stand der Technik die untere, schalenförmige Abdeckung entsprechend den im Anspruch 1 angegeben Merkmalen ausgebildet, nämlich dass die untere Abdeckung auf ihrer Oberseite eine sich von der Begrenzungslinie, welche die Durchtrittsöffnung bzw. die Durchtrittsöffnungen außen umschließt, nach außen anschließende, umlaufend geschlossene und glatte Auflagefläche für eine damit korrespondierende obere Abdeckung aufweist, so kann diese untere Abdeckung sowohl für den bekannten Verwendungszweck, nämlich zusammen mit dem bekannten Verschlussteil für das Verhindern des Überkochens, als auch zusammen mit der gegen das Verschlussteil ausgetauschten, oberen Abdeckung gemäß dem Anspruch 1 für den neuen Verwendungszweck, nämlich das Frischhalten des Behälterinhaltes und das Fixieren der Abdeckung verwendet werden. Es ist auch möglich, dass das Verschlussteil der gattungsbildenden Vorrichtung , soweit es nicht bis in die Auflagefläche bzw. den Anlagebereich hinein reicht, auf der unteren Abdeckung verbleiben kann und die obere Abdeckung gemäß dem Anspruch 1 über dem Verschlussteil positioniert wird. Da die Herstellungskosten für die untere Abdeckung um ein Vielfaches höher als die Herstellungskosten für das Verschlussteil und die obere Abdeckung sind, und da nur zusätzlich eine neue obere Abdeckung nötig ist, ist eine erhebliche Kosteneinsparung sowohl bei der Herstellung wie auch bei der Lagerhaltung möglich. Weiter ist der Platzbedarf am Anwendungsort, z.B. in der Küche, verringert.

Mit der Vorrichtung gemäß der Erfindung wird also erreicht, dass mit einfachen Mitteln zusätzliche Funktionen ermöglicht werden, wie das Frischhalten des Lebensmittelbehälterinhaltes durch Erzeugung eines Unterdrucks im Behälter und wie das Fixieren der aufgelegten Abdeckungen gegenüber dem Behälter und damit das Verhindern eines ungewollten Verschüttens bzw. Entleerens von flüssigem bzw. festem Behälterinhalt zum Beispiel durch unachtsame Bewegungen.
Hierzu wirken die gemäß dem Anspruch 1 ausgebildeten oberen und unteren Abdeckungen zusammen. Zunächst wird die untere Abdeckung auf den Behälter aufgelegt. Dies muss nicht exakt zentrisch erfolgen. Es genügt wenn die untere Abdeckung umlaufend auf dem oberen Behälterrand aufliegt und die Durchtrittsöffnung bzw. die Durchtrittsöffnungen über der Behälteröffnung liegen. Dann wird die obere Abdeckung lose auf die untere Abdeckung aufgelegt, wobei der äußerste Rand der oberen Abdeckung auf der Auflagefläche der unteren Abdeckung umlaufend anliegt. Auch bei diesem Auflegen muss nicht eine exakte Position beachtet werden. Es genügt, wenn der äußere Rand der oberen Abdeckung auf der Auflagefläche zu liegen kommt und diese Auflagefläche und der Anlagebereich der oberen Abdeckung im Wesentlichen übereinander liegen. Da die unteren Abdeckung im Bereich der Berührungslinien zum Behälterrand und die obere Abdeckung im Berührungsbereich mit der unteren Abdeckung aus elastischem Material gebildet sind, ist schon beim losen Auflegen ein dichter Abschluss des Behälters gegenüber der Umgebung gewährleistet.
Drückt man nun beispielsweise mit der Hand die obere Abdeckung zusammen mit dem darunter befindlichen Bereich der unteren Abdeckung unter elastischer Verformung der beiden Abdeckungen nach unten in Richtung zum Behälterboden, so verringert sich das abgedeckte Behältervolumen und es wird unter der Abdeckung befindliche Luft oder sonstiger Behälterinhalt aus dem Behälter gedrückt. Beim Herbeiführen dieses Verformungszustandes der beiden Abdeckungen legt sich der am unterseitigen Randbereich der oberen Abdeckung vorgesehene Anlagebereich vollflächig an die damit korrespondierende und darunter befindliche Auflagefläche der unteren Abdeckung an. Wird nun das Herunterdrücken beendet bzw. aufgehoben, so versucht die untere Abdeckung aufgrund ihrer Elastizität bzw. Rückstellkraft vom elastisch gedehnten und nach unten verformten Zustand wieder in die angehobene Ausgangsstellung zu gelangen, was jedoch nur in geringfügigem Umfang gelingt, da hierbei ein Unterdruck im völlig abgedeckten bzw. verschlossenen Behälterinnenraum erzeugt wird, der dieser Rückstellung entgegenwirkt. Es stellt sich zwischen der Rückstellkraft, welche die Abdeckung in die obere Ausgangslage bringen möchte, und der Sogkraft infolge des Unterdruckes, welche die Abdeckungen in der heruntergedrückten Stellung halten möchte, ein Gleichgewichtszustand ein. Der Unterdruck wirkt einerseits auf die untere Abdeckung und presst diese gegen den oberen Behälterrand. Andererseits wirkt der Unterdruck über die Durchtrittsöffnung bzw. die Durchtrittsöffnungen auf die obere Abdeckung und presst diese gegen die untere Abdeckung, wobei sich, wie schon dargelegt, der am unterseitigen Randbereich der oberen Abdeckung vorgesehene Anlagebereich vollflächig an die darunter befindliche Auflagefläche der unteren Abdeckung anlegt bzw. presst. Der Unterdruck bewirkt also dass die obere Abdeckung im Bereich der Durchtrittsöffnung bzw. Durchtrittsöffnungen nach unten gezogen wird. Aufgrund der Steifigkeit der oberen Abdeckung bewirkt dieses nach unten Ziehen, dass auch die außerhalb der Durchtrittsöffnung(en) liegenden Bereiche, also auch der genannte Anlagebereich mit einer nach unten gerichteten Anpresskraft beaufschlagt wird. Diese Anpresskraft wiederum generiert eine so starke Reibungskraft, dass zwischen dem genannte Anlagebereich und der korrespondierenden Auflagefläche keine Relativbewegung möglich ist. Die Haftreibung zwischen den Berührungsflächen der beiden Abdeckungen ist also so groß, dass sich die Berührungsflächen nicht gegeneinander verschieben. Im Gegensatz zu starren Materialien ist bei elastischeren und leicht verformbaren Materialien, wie z. B. Silikon, bei einer glatten Ausbildung der Berührungsflächen eine höhere Haftreibungszahl und damit eine höhere Reibungskraft erzielbar, die ein gegenseitiges Verschieben der Berührungsflächen verhindert.

Mit der Vorrichtung gemäß der Erfindung lässt sich ein über mehrere Tage wirkender Unterdruck im Behälter halten. Damit ist über mehrere Tage die Abdeckungen zuverlässig am Behälter gehalten und der Behälterinhalt einem Unterdruck ausgesetzt, der die Haltbarkeit vieler Lebensmitteln erhöht.

Ein Aufheben des Unterdruckes bzw. ein Ablösen der Abdeckungen wird am einfachsten dadurch bewerkstelligt, dass der über den Behälterrand herausstehende Überstand an einer beliebigen Stelle hochgebogen bzw. aufgehebelt wird und somit ein Luftzugang zum Behälterinnenraum geschaffen wird.

Vorteilhafte Ausbildungen sind in den Unteransprüchen angegeben.

Mit der Ausbildung gemäß dem Anspruch 2 wird erreicht, dass die obere Abdeckung nicht punktgenau platziert werden muss. Weiter wird mit dieser Ausbildung die Funktionssicherheit erhöht. Mögliche Oberflächenfehler oder mögliche Verunreinigungen an der Auflagefläche oder dem Anlagebereich führen nicht zum Versagen der Funktion, da die Kräfteübertragung bei derartigen Fehlstellen auf die nächste Umgebung umgeleitet wird.

Die im Anspruch 3 angegebenen Merkmale sorgen dafür, dass die obere Abdeckung schon im lose aufgelegten Zustand umlaufend dicht auf der unteren Abdeckung aufliegt. Dies ergibt schon eine verbesserte Frischhaltefunktion und ist insbesondere zur Erzeugung des Unterdrucks beim Herabdrücken beider Abdeckungen von großer Bedeutung.
Mit der Maßnahme nach Anspruch 4 lässt sich die obere Abdeckung am leichtesten und exaktesten herstellen.
Die Randverstärkung nach Anspruch 5 ergibt eine noch zuverlässigere Abdichtung zwischen der Auflagefläche und dem Anlagebereich. Insbesondere wenn die Durchtrittsöffnung bzw. die Durchtrittsöffnungen so angeordnet sind, dass beim Herunterdrücken der beiden Abdeckungen entlang der Auflagefläche bzw. dem Anlagebereich unterschiedliche Verformungen in ihrer Ebene auftreten, so gleicht die Randverstärkung Verformungsunterschiede aus.
Mit den Maßnahmen gemäß dem Anspruch 6 wird einerseits erreicht, dass erst im Heruntergedrückten Zustand der beiden Abdeckungen die Anlagefläche und der Anlagebereich flächig aneinander anliegen und das besonders nachteilige Aufstellen des äußersten Randes der obersten Abdeckung vermieden wird.
Die in den Ansprüchen 7 und 8 angegeben Merkmale machen die Wirkungsweise der Vorrichtung deutlich und zeigen, welche Maßnahmen bzw. Vorrichtungsteile den Unterdruck erzeugen bzw. aufrechterhalten. Die beim Herunterdrücken der beiden Abdeckungen erzeugte elastische Verformung generiert eine Rückstellkraft, welche die Abdeckungen in die Ausgangslage zurückbringen sucht. Diesem Rückstellen wirkt jedoch die Kraft entgegen, die sich aufgrund des sich beim Aufheben des Herunterdrückens ergebenden Unterdruckes im Behälter einstellt. Es stellt sich ein Gleichgewichtszustand zwischen der Rückstellkraft infolge der elastischen Verformung und der Sogkraft infolge des Unterdruckes im Behälter ein.

Weitere bevorzugte Ausgestaltungen sind in den Ansprüchen 9 bis 15 angegeben.

Nachfolgend werden Ausführungsbeispiele anhand der Zeichnung beschrieben. Diese zeigt in
- Fig. 1: die Vorrichtung, wobei die obere Abdeckung noch nicht auf der unteren Abdeckung aufgelegt ist,
- Fig. 2: die auf einen Lebensmittelbehälter aufgelegte untere Abdeckung und eine darauf aufgelegte obere Abdeckung, wobei gerade mit der Hand das Herunterdrücken beider Abdeckung beginnt,
- Fig. 3: unterschiedliche Ausgestaltungsmöglichkeiten der Abdeckungen und der Durchtrittsöffnungen in der unteren Abdeckung,
- Fig. 4: einen Vertikalschnitt durch die auf einen Lebensmittelbehälter lose aufgelegten Abdeckungen in schraffierter Darstellung, wobei zusätzlich die spätere, heruntergedrückte Position nichtschraffiert dargestellt ist und
- Fig. 5: einen Vertikalschnitt durch die auf einen Lebensmittelbehälter aufgelegten, nach unten gedrückten bzw. dort gehaltenen Abdeckungen in schraffierter Darstellung, wobei die ursprüngliche, lose aufgelegte Position nichtschraffiert dargestellt ist.

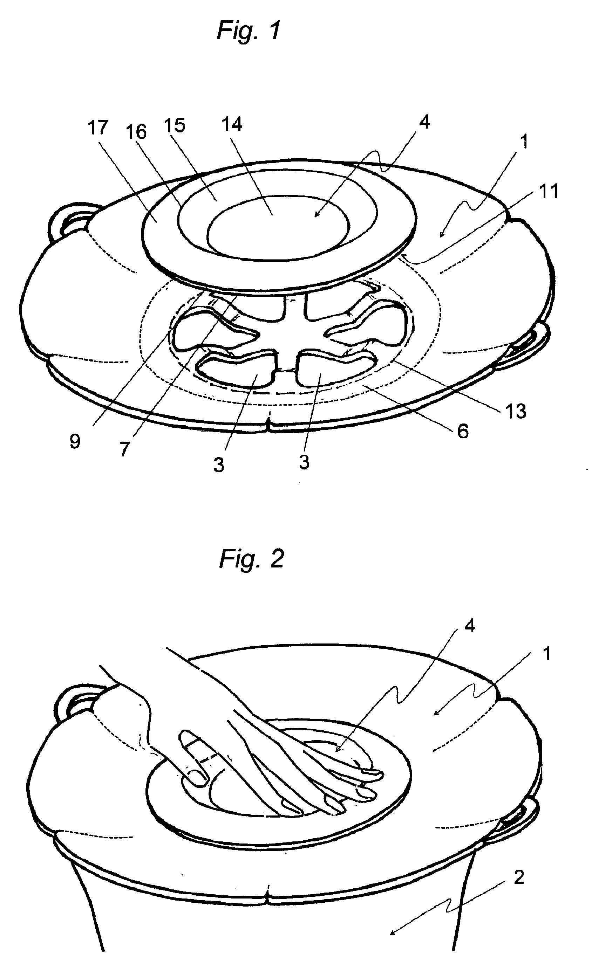

Die Figur 1 zeigt die obere Abdeckung (4) im noch nicht auf die untere Abdeckung aufgelegten Zustand. Nicht dargestellt ist, dass die untere Abdeckung mit ihrer unteren, konvexen Fläche lose auf einem Lebensmittelbehälter (2) so aufgelegt ist, dass ihr äußerer Rand über den Behälterrand übersteht und die Durchtrittsöffnungen (3) innerhalb der Behälteröffnung zu liegen kommen. Die erfindungsgemäße Vorrichtung ist für alle Größen von Lebensmittelbehältern (2) verwendbar soweit sie die vorig genannte Bedingung erfüllen.
Die untere Abdeckung (1) weist einen horizontalen Zentralbereich auf, an den sich nach außen ein ansteigender Ringabschnitt, dann ein abfallender Ringabschnitt und dann eine stetig ansteigender Ringabschnitt mit einer unteren, konvexen Fläche anschließt. Mit dieser Fläche liegt die untere Abdeckung (1) auf dem oberen Behälterrand auf. Sechs Durchtrittsöffnungen (3) erstrecken sich regelmäßig verteilt vom Zentralbereich bis zum äußeren Rand des abfallenden Ringabschnittes und sind durch Radialstege voneinander getrennt. Die Durchtrittsöffnungen (3) sind direkt oder mit geringem Abstand von einer Begrenzungslinie (13) umschlossen bzw. eingefasst, an welche sich nach außen die Auflagefläche (6) der unteren Abdeckung (1) anschließt. Diese Auflagefläche (6) umschließt ringförmig die Durchtrittsöffnungen (3) und ist mit einer besonders glatten Oberfläche hergestellt.

Die Formgebung der oberen Abdeckung (4) entspricht im Wesentlichen der Formgebung der unteren Abdeckung (4) bis zur Begrenzungslinie (13) und weist ebenfalls einen horizontal verlaufenden Zentralbereich (14) auf an den sich auch ein erster Ringabschnitt (15) mit ansteigender Neigung, dann ein Kuppelabschnitt (16) und dann ein nach unten abfallender zweiter Ringabschnitt (17) anschließt, der jedoch länger als der zweite Ringabschnitt der unteren Abdeckung (1) ist. An der Unterseite der oberen Abdeckung (4) erstreckt sich von der äußersten unteren Randlinie (7) nach innen der Anlagebereich (11), der ebenfalls mit einer besonders glatten Oberfläche hergestellt ist und mit der Auflagefläche (6) der unteren Abdeckung (1) zusammenwirkt.

In Fig. 2 ist dargestellt, wie die beiden Abdeckung (1,4) aufeinander und auf die untere Abdeckung (1) auf einem Lebensmittelbehälter (2) aufgelegt ist. Weiter ist erkennbar, dass von Hand ein Druck auf die obere Abdeckung (4) ausgeübt wird. Dieser Druck wird auf die untere Abdeckung (1) weitergegeben, wobei sich beide Abdeckungen (1,4) im Bereich der Behälteröffnung nach unten elastisch verformen und Luft aus dem Behälterinnern gepresst wird. Wird der Druck durch die Hand beendet bzw. aufgehoben, so erzeugt die elastische Rückstellkraft beiden Abdeckungen (1,4), welche diese wieder in die Ausgangslage zu verbringen sucht, einen Unterdruck im völlig abgedeckten Lebensmittelbehälter. Dieser presst die beiden Abdeckungen (1,4) gegen einander und die untere Abdeckung (1) gegen den oberen Behälterrand. Damit wird ein lange anhaltender Unterdruck (p2) im Behälter (2) erzeugt und eine relativ stabile Fixierung der Abdeckungen (1,4) untereinander wie auch der Abdeckungen (1,4) gegenüber dem Behälter (2) geschaffen.

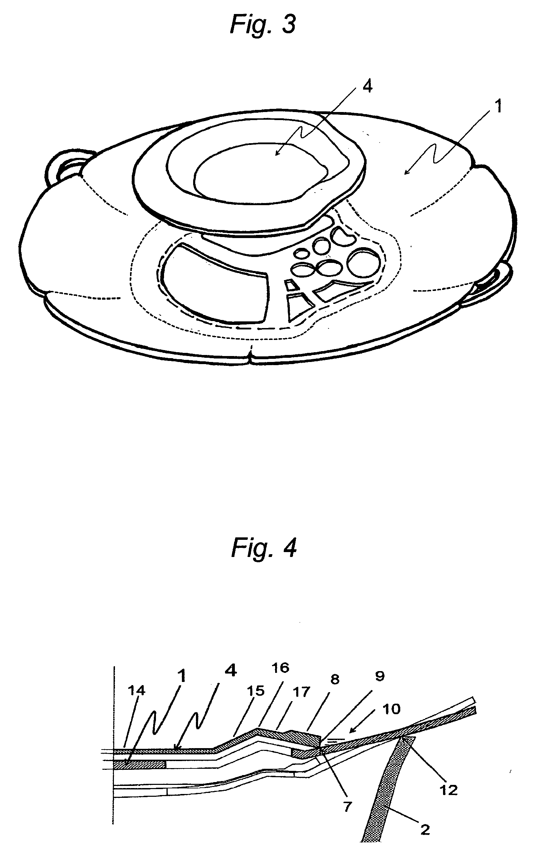

In Fig. 3 sind beispielhaft verschiedenste Ausführungsformen der Abdeckungen dargestellt, wobei deutlich wird, dass die Formgebung nicht auf die kreisförmige Ausbildung der Abdeckungen (1,4) oder die regelmäßig über den Umfang verteilte Anordnung der Durchtrittsöffnungen (3) beschränkt ist. Wenn die obere Abdeckung (4) eine geschwungenen bzw. keine scharfeckigen Grundriss aufweist ist die voran beschriebene Funktion gut erreichbar. Ebenso müssen hierzu sowohl die Auflagefläche (6) wie auch der Anlagebereich (11) einer geschwungenen, vorzugsweise einer sanft geschwungenen Linienführung folgen.
Es ist auch möglich, dass die untere Abdeckung lediglich eine einzige Durchtrittsöffnung (3) im Bereich ihres Schalentiefpunktes aufweist.

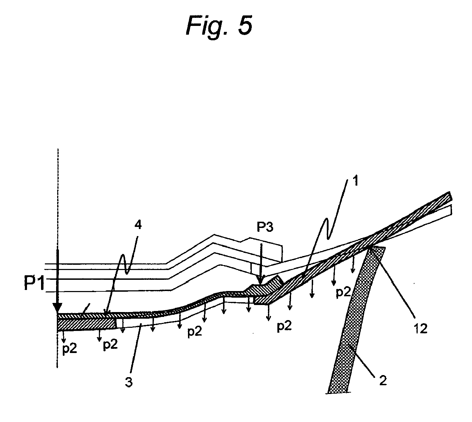

In Fig. 4 und Fig. 5 ist das Funktionsprinzip der erfindungsgemäßen Vorrichtung am deutlichsten erkennbar.
Zum Abdecken des Behälters (2) wird, wie in Fig. 4 in schraffierter Darstellung gezeigt, die untere Abdeckung (1) auf den gewählten Lebensmittelbehälter (2) aufgelegt. Hierbei ist nur zu beachten, dass die Durchtrittsöffnung (3) innerhalb der Behälteröffnung zu liegen kommt und der Behälterrand überdeckt wird. Dies sind also leicht einzuhaltende Einschränkungen. Nun wird die obere Abdeckung (4) zunächst lose auf die untere Abdeckung (1) aufgelegt und zwar so, dass die äußerste untere Randlinie (7) der oberen Abdeckung (4) auf der Auflagefläche (6) der unteren Abdeckung (6) zu liegen kommt und der Anlagebereich (11) der oberen Abdeckung (4) möglichst über der Auflagefläche (6) der unteren Abdeckung (1) liegt. Da hierbei die obere Abdeckung (4) umlaufend lediglich entlang ihrer äußersten unteren Randlinie (7) auf der untern Abdeckung (1) aufliegt ist schon eine zuverlässige Abdichtung und damit bereits eine gegenüber herkömmlichen Abdeckungen verbesserte Frischhaltefunktion geschaffen.

Um nun die Frischhaltefunktion voll zu entfalten und eine Fixierung der Abdeckungen (1,4) gegeneinander und gegenüber dem Behälter (2) zu erzielen, ist beispielsweise von Hand eine nach unten gerichtete Druckkraft (P1) im Mittelbereich der oberen Abdeckung (4) aufzubringen, wie in Fig. 2 und 5 dargestellt. Beginnend von der Auflage entlang der Begrenzungslinie (7) legen sich zunehmend die sich nach innen anschließenden Teilbereiche des Anlagebereichs (11) der oberen Abdeckung (4) gegen die Auflagefläche (6) der unteren Abdeckung (1), wobei durch die Formgebung bedingt zunehmend auch ein Druck von der oberen Abdeckung (4) auf den zunehmenden Berührungsbereichen zur unteren Abdeckung (1) erzeugt wird, beide Abdeckung also dicht aufeinander haften und zusammen weiter nach unten gedrückt werden. Hierbei wird das Behältervolumen verringert und Luft vom oberen Behälterbereich nach außen gepresst. In dieser Position, wie sie in Fig. 5 schraffiert dargestellt ist, sind die beiden Abdeckung (1,4) im Öffnungsbereich des Behälters (2) elastisch nach unten und die untere Abdeckung (1) außerhalb der Behälteröffnung nach oben verformt. Durch die von Hand ausgeübte Kraft (P1) werden weiter die beiden Abdeckungen (1,4) aneinander gepresst und die untere Fläche der unteren Abdeckung (1) gegen den oberen Behälterrand gepresst. Insbesondere werden dabei durch die voran genannte Kraftbeaufschlagung der Anlagebereich (11) der oberen Abdeckung (4) gegen die Auflagefläche (6) der unteren Abdeckung (1) gepresst. Dies hat wiederum zur Folge, dass eine Relativbewegung der beiden Abdeckungen (1,4) in ihrer Berührungsebene bzw. parallel zur Ebene der Abdeckungen (1,4) durch die hierbei generierte Reibungskraft verhindert wird, welche dem Produkt aus der Reibungszahl zwischen dem Anlagebereich (11) und der Auflagefläche (6) und der durch das Herunterdrücken von Hand erzeugten Normalkraft auf den Anlagebereich (11) bzw. die Auflagefläche (6) entspricht. Damit sind die beiden Abdeckungen (1,4) im Anlagebereich (11) bzw. bei derAnlagefläche (6) faktisch gegeneinander fixiert. Dies wird noch zuverlässiger gewährleistet, wenn die obere Abdeckung (4) mit einem Randverstärkungsbereich (8) versehen ist, der sich vom äußeren Rand bis etwa zu einer Linie erstreckt, welche bei heruntergedrückten Abdeckungen (1,4) über einer äußeren Umgrenzungslinie der Durchtrittsöffnungen (3) liegt. Erstreckt sich der Randverstärkungsbereich (8) bis über diese Linie hinaus, d. h. er überdeckt im aufgelegten Zustand der beiden Abdeckungen (1,4) gerade den äußeren Rand der Durchtrittsöffnungen (3), bleibt das gegenseitige Festhalten der beiden Abdeckungen (1,4), insbesondere nach Entlastung der von Hand aufgebrachten Kraft (P1) zuverlässiger erhalten.

Wird die von Hand aufgebrachte Druckkraft (P1) allmählich aufgehoben, so versucht die untere Abdeckung (1) aufgrund ihrer elastischen Rückstellkraft zu ihrer ungedehnten Ursprungsposition zurück zu gelangen. Da die Durchtrittsöffnungen (3) jedoch durch die obere Abdeckung (4) verschlossen sind und der Randbereich der oberen Abdeckung (4), wie voran dargelegt, faktisch an der unteren Abdeckung (1) fixiert ist, gelingt es der unteren Abdeckung (1) nur in geringerem Umfang in Richtung zur Ursprungsposition zurück zu gelangen. Dieses Zurückbewegung bewirkt, dass sich im Behälter (2) zunehmend ein Unterdruck (p2) aufbaut, bis sich ein Gleichgewicht zwischen der genannten Rückstellkraft und der entgegen gerichteten Sogkraft infolge des zunehmenden Unterdruckes (p2) einstellt hat. Die obere Abdeckung (4) ist hierbei ebenfalls verformt, insbesondere gestreckt, bleibt aber zumindest im Anlagebereich (12) an der unteren Abdeckung (1) haften. Der Randverstärkungsbereich (8) der oberen Abdeckung (4) wirkt sich ausgleichend auf unterschiedliche Verformungen bzw. Spannungsspitzen der unteren Abdeckung (1) infolge ungleich verteilter Durchtrittsöffnungen (3) und/oder über den Umfang variierender Radialquerschnittsausbildungen der unteren Abdeckung (1) aus. Gleiches gilt bei nicht zentrisch aufgebrachter Druckkraft (P1) und/oder nicht zentrisch aufgelegte Abdeckungen (1).

Für die Zuverlässigkeit der Vorrichtung ist es dienlich, insbesondere die Auflagefläche (6) der unteren Abdeckung (1), den Anlagebereich (11) der oberen Abdeckung (4), die Berührungslinie der unteren Abdeckung (1) mit dem oberen Behälterrand sowie den oberen Rand des Behälters (2) selbst möglichst sauber und frei von störenden Auflagen wie beispielsweise Haare oder Lebensmittelreste zu halten.
Es hat sich gezeigt, dass insbesondere die langanhaltende Zuverlässigkeit noch dadurch gesteigert werden kann, dass in die durch die äußere Wandung (9) der oberen Abdeckung (4) und des nach außen benachbarten Oberflächenabschnittes der unteren Abdeckung (1) gebildete Rinne eine Flüssigkeitsrinne (10) bildet, in die bzw. Wasser eingebracht wird. Mit dieser Maßnahme wird erreicht, dass selbst wenn kleinste Unregelmäßigkeiten, beispielsweise haartiefe Rillen oder geringste Verunreinigungen, in der Oberfläche des Anlagebereichs (11) und/oder der Auflagefläche (6) vorliegen die Gefahr des durch den Unterdruck (p2) hervorgerufenes Ansaugen von Außenluft und damit des Druckabbaus und letztlich des Versagens der erhöhten Frischhaltefunktion deutlich verringert wird. Die Flüssigkeit in der Flüssigkeitsrinne (10) dient als Abdichtungsmittel und die Flüssigkeit selbst kann durch die sich infolge der geringsten Verunreinigungen möglicherweise bildenden, sehr engen Zugangswegstücke nicht eindringen, was für Luft möglich wäre.

Mit der erfindungsgemäßen Vorrichtung ist also eine langanhaltende Fixierung der beiden Abdeckungen (1,4) gegeneinander und der unteren Abdeckung (1) gegenüber dem Behälter erreichbar. Der erzeugte Unterdruck (p2) hält sich über Wochen, womit das langanhaltende Frischhalten des Behälterinhaltes gewährleistet ist.

## Patentansprüche

1. Vorrichtung zum Abdecken von festen, oben offenen Lebensmittelbehältern (2) mit unterschiedlich großen Behälteröffnungen, bestehend aus einer schalenförmigen unteren Abdeckung (1) und einer oberen Abdeckung (4), wobei die untere Abdeckung mit einer unteren, konvexen Fläche mit Überstand auf den oberen Rand des jeweiligen Behälters (2) umlaufend auflegbar ist, mindestens eine Durchtrittsöffnung (3) im Bereich des Schalentiefpunktes aufweist, welche im aufgelegten Zustand der unteren Abdeckung (1) über der Behälteröffnung liegt, und zumindest im Bereich zwischen der Auflagelinie (12), die sich bei Auflage auf den Behälterrand des größten Behälters ergibt und einer die Durchtrittsöffnung (3) oder die Durchtrittsöffnungen (3) außen umschließenden Begrenzungslinie (13) aus elastischem Material, insbesondere aus Silikon gebildet ist,
**dadurch gekennzeichnet, dass**
die untere Abdeckung (1) auf ihrer Oberseite eine sich von der Begrenzungslinie (13) nach außen anschließende, umlaufend geschlossene und glatte Auflagefläche (6) aufweist,
die auf die untere Abdeckung (1) auflegbare obere Abdeckung (4) an ihrer Unterseite einen sich vom äußeren Rand nach innen anschließenden, umlaufend geschlossenen Anlagebereich (11) mit glatter Oberfläche aufweist,
im auf die untere Abdeckung (1) aufgelegten Zustand die Durchtrittsöffnung (3) oder die Durchtrittsöffnungen (3) deckelartig mit äußerem Überstand überdeckt und mit ihrer äußersten, unteren Randlinie (7) auf der Auflagefläche (6) umlaufend aufliegt und im Bereich der darunter befindlichen Behälteröffnung in Richtung zum Behälterboden unter Mitnahme des darunter befindlichen Bereichs der unteren Abdeckung (1) unter elastischer Verformung beider Abdeckungen (1,4) und unter Volumenverringerung des abgedeckten Behälterinnenraumes nach unten drückbar ist wobei im heruntergedrückten Zustand beider Abdeckungen (1,4) der Anlagebereich (11) der oberen Abdeckung (4) vollflächig an der Auflagefläche (6) der unteren Abdeckung (1) anliegt.

2. Vorrichtung nach Anspruch 1, **dadurch gekennzeichnet, dass** die Breite der umlaufenden Auflagefläche (6) mindestens der doppelten Dicke der unteren Abdeckung (1) entspricht.

3. Vorrichtung nach einem der Ansprüche 1 oder 2, **dadurch gekennzeichnet, dass** der Übergang vom Anlagebereich (11) der oberen Abdeckung (4) zur äußeren Wandung (9) der oberen Abdeckung (4) entlang der äußersten, unteren Randlinie (7) scharfkantig ausgebildet ist.

4. Vorrichtung nach einem der Ansprüche 1 bis 3, **dadurch gekennzeichnet, dass** die äußere Wandung (9) der oberen Abdeckung (4) im nicht durch Herunterdrücken verformten Zustand lotrecht verläuft.

5. Vorrichtung nach einem der Ansprüche 1 bis 4, **dadurch gekennzeichnet, dass** die obere Abdeckung (4) einen sich nach oben erstreckenden Randverstärkungsbereich (8) aufweist.

6. Vorrichtung nach einem der Ansprüche 1 bis 5, **dadurch gekennzeichnet, dass** der Anlagebereich (11) der lose aufgelegten Abdeckung (1) im spitzen Winkel zur Auflagefläche (6) der unteren Abdeckung (1) verläuft und die obere Abdeckung (4) im lose aufgelegten Zustand lediglich entlang ihrer äußersten, unteren Randlinie (7) die Auflagefläche (6) berührt.

7. Vorrichtung nach einem der Ansprüche 1 bis 6, **dadurch gekennzeichnet, dass** sich mit Entlastung der Druckkraft (P1), mit welcher die Volumenverringerung des abgedeckten Behälterinnenraumes herbeiführbar war, aufgrund der Rückstellkraft der elastisch verformten Bereiche der abgedeckten unteren Abdeckung (1) und aufgrund des teilweisen Zurückbewegens in Richtung der im lose aufgelegten Zustand vorhandenen Position ein Unterdruck (p2) im Behälter aufbaut, der die untere Abdeckung (1) gegen die obere Auflagelinie (12) des Behälters presst.

8. Vorrichtung nach einem der Ansprüche 1 bis 7, **dadurch gekennzeichnet, dass** sich nach Entlastung der Druckkraft (P1), mit welcher die Volumenverringerung des abgedeckten Behälterinnenraumes herbeiführbar war, aufgrund der Rückstellkraft der elastisch verformten Bereiche der oberen und unteren Abdeckung (1,4) und aufgrund dem teilweisen Zurückbewegen in Richtung der im lose aufgelegten Zustand vorhandenen Position ein Unterdruck (p2) im Behälter einstellt, der durch die mindestens eine Durchtrittsöffnung (3) die obere Abdeckung beaufschlägt und eine nach unten gerichtete Kraft (P3) erzeugt, welche den Anlagebereich (11) der oberen Abdeckung (4) gegen die Auflagefläche (6) der unteren Abdeckung (1) presst.

9. Vorrichtung nach einem der Ansprüche 1 bis 8, **dadurch gekennzeichnet, dass** die untere Abdeckung (1) im Bereich der Auflagefläche (6) und die obere Abdeckung im Bereich des Anlagebereichs (11) eine hohe Reibungszahl aufweisen.

10. Vorrichtung nach einem der Ansprüche 5 bis 9, **dadurch gekennzeichnet, dass** sich der Randverstärkungsbereich (8) von der äußeren Wandung (9) bis etwa zu der Linie erstreckt, vorzugsweise diese Linie überdeckend erstreckt, welche bei heruntergedrückten Abdeckungen (1,4) über einer äußeren Umgrenzungslinie der Durchtrittsöffnung (3) bzw. der Durchtrittsöffnungen (3) der unteren Abdeckung (1) liegt.

11. Vorrichtung nach einem der Ansprüche 1 bis 10, **dadurch gekennzeichnet, dass** die obere Abdeckung (4) mindestens einen durchsichtigen, insbesondere aus Glas bestehenden Bereich aufweist, der im aufgelegten Zustand durch die Durchtrittsöffnung (3) oder die Durchtrittsöffnungen (3) den Einblick in den Behälterinnenraum ermöglicht, oder gänzlich aus Silikon gebildet ist.

12. Vorrichtung nach einem der Ansprüche 1 bis 11, **dadurch gekennzeichnet, dass** die obere Abdeckung (4) mit mindestens einer nach unten abstehenden Platzierungshilfe ausgebildet ist, die beim Auflegen der oberen Abdeckung (4) mit einer Anlagefläche an der unteren Abdeckung (1) in Anlage bringbar ist.

13. Vorrichtung nach einem der Ansprüche 1 bis 12, **dadurch gekennzeichnet, dass** die äußere Wandung (9) der oberen Abdeckung (4) im aufgelegten Zustand eine Flüssigkeitsrinne (10) bildet.

14. Vorrichtung nach einem der Ansprüche 1 bis 13, **dadurch gekennzeichnet, dass** die untere Abdeckung (1) und/oder die obere Abdeckung (4) drehsymmetrisch zur durch den Flächenschwerpunkt der jeweiligen Abdeckung (1,4) verlaufenden Vertikalachse ist.

15. Vorrichtung nach einem der Ansprüche 1 bis 14, **dadurch gekennzeichnet, dass** die obere Abdeckung (4) einen im Wesentlichen horizontal verlaufenden Zentralbereich (14) im Bereich ihres Flächenschwerpunktes aufweist, sich an den Zentralbereich ein erster Ringabschnitt (15) mit ansteigender Neigung, dann ein Kuppelabschnitt (16) und dann ein nach unten abfallenden Ringabschnitt (17) bis zum Außenrand anschließt, dass die untere Abdeckung (1) im Bereich der aufgelegten oberen Abdeckung (4) im Wesentlichen deren Formgebung aufweist, dass mehrere Durchtrittsöffnungen (3) in der unteren Abdeckung (1) durch radiale Stege voneinander getrennt sind und sich vom Zentralbereich bis zum nach unten abfallenden Ringabschnitt erstrecken und die Unterseite eines sich daran anschließenden, nach oben ansteigenden Ringabschnittes die untere, konvexe Kontaktfläche zum Behälterrand bildet.
